# EUROPÄISCHE PATENTSCHRIFT

(11) **EP 2 313 252 B1**
(45) Veröffentlichungstag und Bekanntmachung des Hinweises auf die Patenterteilung: **15.06.2016**
(21) Anmeldenummer: 09776970.7
(22) Anmeldetag: 06.07.2009
(51) Int. Cl.: B27D 5/00, B29C 63/00

(54) **VERFAHREN UND VORRICHTUNG ZUR ANBRINGUNG VON KANTENBÄNDERN AUF SCHMALFLÄCHEN VON WERKSTÜCKEN**
METHOD AND DEVICE FOR APPLYING EDGE STRIPS ONTO NARROW SURFACES OF WORK PIECES
PROCÉDÉ ET DISPOSITIF D'APPLICATION DE BANDES DE CHANT SUR LES PETITS CÔTÉS DE PIÈCES

(30) Priorität: 21.07.2008 DE 102008034115
(43) Veröffentlichungstag der Anmeldung: 27.04.2011
(73) Patentinhaber: Karl W. Niemann GmbH & Co. KG, 32361 Pr. Oldendorf (DE)
(72) Erfinder: SCHUMACHER, Reinhard, 32361 Preussisch Oldendorf (DE)
(74) Vertreter: Von Rohr Patentanwälte Partnerschaft mbB
(86) Internationale Anmeldenummer: PCT/EP2009/004859
(87) Internationale Veröffentlichungsnummer: WO 2010/009805

(56) Entgegenhaltungen:
- EP-A- 0 897 781
- WO-A-2009/026977
- DE-A1- 10 144 524
- DE-A1- 19 810 680
- DE-A1-102006 021 171
- DE-C1- 4 215 755

## Beschreibung

Die vorliegende Erfindung betrifft die Technologie zur Anbringung von Kantenbändern auf die Oberfläche von Werkstücken. Insbesondere betrifft die vorliegende Erfindung ein Verfahren zur Anbringung eines Kantenbandes auf mindestens eine Schmalfläche eines insbesondere plattenförmigen Werkstücks durch Fügen sowie die nach dem erfindungsgemäßen Verfahren erhältlichen Werkstücke und eine Vorrichtung zur Durchführung des erfindungsgemäßen Verfahrens.

Im Stand der Technik ist eine Vielzahl von Methoden zur Anbringung von Kantenbändern auf die Schmalflächen von plattenförmigen Werkstücken bekannt.
Kantenbänder werden in herkömmlicher Weise in einer Durchlaufmaschine, wie einer Kantenbearbeitungsmaschine, mittels eines Kantenanleimaggregates auf den Schmalflächen von plattenförmigen Werkstücken angebracht. Diesem Aggregat wird das jeweilige Kantenband beispielsweise aus einem Magazin zugeführt, wobei üblicherweise unmittelbar vor dem Anfahren des Kantenbands an die Werkstückschmalfläche ein Schmelzklebstoff auf die Schmalfläche des Werkstücks aufgetragen wird.

Nach diesem Verfahren werden zum heutigen Zeitpunkt nahezu alle Beaufschlagungen von Werkstücken mit Kantenbändern durchgeführt. Das Verfahren ist kostengünstig und zur Herstellung größerer Stückzahlen geeignet, bringt jedoch eine Vielzahl von Nachteilen mit sich. Das Aufschmelzen des Schmelzklebstoffs ist energieaufwendig und somit kostenträchtig. Es vergeht beispielsweise bis zu einer halben Stunde, bis eine Betriebstemperatur von 150 bis 210 °C erreicht wird, und es wird außerdem Energie zur Beheizung des Leimbehälters benötigt, um diese Temperatur aufrechtzuerhalten. Der Klebstoffauftrag erfolgt durch Walzen oder Rakeln auf das Werkstück, wodurch bei Verwendung von z. B. Spanplatten Späne bzw. Holzstücke aus dem Werkstück gerissen werden können und somit die Walze bzw. die Rakel verschmutzen, was zu einer ungleichmäßigen und fehlerhaften Verklebung führt. Des weiteren erhält die aufgetragene Klebstoffschicht durch den Walzen- bzw. Rakelauftrag des Klebstoffs eine Rasterung (d. h. also gewissermaßen ein Muster) und weist somit eine ungleichmäßige Dicke auf, was wiederum zu einer ungleichmäßigen Verklebung führt. Hierdurch wird die Klebefuge auch anfällig für das Eindringen von Schmutz und Feuchtigkeit, so daß die Verklebung im Laufe der Zeit wieder gelöst wird. Ferner wird beim Auftrag des Klebstoffs eine derart große Menge an Klebstoff benötigt, daß beim anschließenden Andrücken des Kantenbandes an das Werkstück Klebstoff aus der Klebefuge quillt und sowohl Werkstück als auch Verarbeitungsmaschine verschmutzt. Um dies zu verhindern, muß das Werkstück vor Verfahrensbeginn aufwendig und kostenintensiv mit Trennmitteln behandelt werden. Aufgrund der geschilderten Nachteile dieses Verfahrens wird seit geraumer Zeit nach alternativen Möglichkeiten zur Anbringung von Kantenbändern auf Schmalflächen von plattenförmigen Werkstücken gesucht.

Andere Verfahren des Standes der Technik versuchen diese Nachteile durch Verwendung eines mit Klebstoff vorbeschichteten Kantenbandes zu vermeiden, wobei die Beschichtung bzw. Beaufschlagung des Kantenbandes mit dem Schmelzkleber vor dem Anfahren des Kantenbandes an die Werkstückschmalfläche vorgenommen werden kann. Hierbei wird der Kleber auf einer Temperatur oberhalb seiner Schmelztemperatur erwärmt und bei dieser Temperatur gehalten. Zur Erwärmung des Schmelzklebstoffes können beispielsweise Heißluft, Infrarot- oder UV-Strahlung oder Mikrowellen eingesetzt werden. Alle Verfahren haben den Nachteil, daß der Energietransfer auf den Klebstoff nur schwach ausgeprägt und die Erwärmung des Schmelzklebstoffs somit relativ langwierig ist. Diese Verfahren eignen sich somit nicht für große Durchsätze bzw. Stückzahlen; zudem muß das Kantenband sehr widerstandfähig gegenüber hohen Temperaturen sein, da bei allen Verfahren auch immer das Kantenband stark miterwärmt wird. Durch die somit erforderlichen Abkühlzeiten wird der Produktionsprozeß nochmals verzögert, und es kommt nur eine sehr begrenzte Auswahl an Materialien für die Herstellung der Kantenbänder in Betracht.

In der DE 10 2006 021 171 A1 ist ein als Deckleiste bezeichnetes Kantenband beschrieben, welches zur Anbringung auf ein plattenförmiges Werkstück vorgesehen ist und aus einem extrudierbaren thermoplastischen Kunststoff besteht. Hierbei wird die Klebstoffschicht in Form eines Schmelzklebstoffes im Wege der Koextrusion auf das Kantenband aufgetragen, so daß es erforderlich ist, zum Zwecke der Befestigung des Kantenbands an der Schmalfläche der jeweiligen Möbelplatte die Schmelzklebstoffschicht zumindest bereichsweise nochmals aufzuschmelzen. Dies erfolgt mittels Laserstrahlung unmittelbar im Zuge der Befestigung, und dazu wird eine lasertaugliche oder laseraktivierbare Klebstoffschicht vorgesehen, die sich mit Hilfe der Laserstrahlung aktivieren oder aufschmelzen läßt.

Man erreicht zwar mit der Laserstrahlung einen intensiveren Wärmetransport, als es mit einer Infrarotstrahlung oder einer Heißluftbestrahlung möglich ist. Der Einsatz des lasergestützten Beschichtungsverfahrens im industriellen Fertigungsprozeß auf einer Holzbearbeitungsmaschine bringt jedoch erhebliche Schwierigkeiten mit sich: So müssen aufwendige Sicherheitsvorkehrungen getroffen werden, um das Bedienungspersonal vor der Laserstrahlung zu schützen. Die Laserstrahlung muß zudem von der Schmelzkleberschicht absorbiert werden, was durch Transmission und Reflexion beeinträchtigt werden kann. Auch die Transparenz des Schmelzklebermaterials spielt eine Rolle hinsichtlich der optischen Eindringtiefe, die durch Farbpartikel und dergleichen beeinflußt wird. Die Eindringtiefe des Lasers und der Energieeintrag durch den Laser muß derart gewählt sein, daß einerseits eine schnelle Erwärmung der Klebstoffschicht gegeben ist, andererseits aber das Kantenband keinen Schaden durch zu hohe Temperaturen nimmt. Des weiteren ist der Einsatz einer Lasereinheit für den geschilderten Zweck sehr kostenintensiv, was auch damit zusammenhängt, daß eine Integration in eine bestehende Produktionsanlage mit erheblichen Schwierigkeiten verbunden ist. Insbesondere ist der Betrieb der Lasereinheit relativ energieintensiv und daher wenig ökonomisch.

Die WO 2009/026977 A1 betrifft eine Kantenleiste für Möbelstücke mit einer Schmelzschicht, wobei die Schmelzschicht sowohl polare als auch unpolare Anteile im Molekülaufbau enthält. Durch Zufuhr von Energie durch beispielsweise Licht und/oder Strahlung soll die Kantenleiste mit Möbelstücken aus unterschiedlichsten Werkstoffen verbindbar sein, insbesondere soll die Schmelzschicht durch Aufschmelzen stoffschlüssig an polaren und unpolaren Werkstoffen unmittelbar anbindbar sein.

Die DE 101 44 524 A1 betrifft ein Verfahren zum Verbinden bzw. Zusammenfügen von thermoplastischen Kunststoffextrudaten, insbesondere in Strang- oder Bandform, mit Werkstoffoberflächen vorzugsweise durch Verkleben sowie die auf diese Weise hergestellten Gegenstände.

Weiterhin betrifft die DE 198 10 680 A1 ein Verfahren zur Herstellung einer mehrschichtigen Folienbahn durch flächiges Zusammenfügen mindestens zweier bahnförmiger Einzelfolien, wobei mindestens eine der Folien auf der Fügeseite eine flächige oder mustermäßige Einwirkung eines Atmosphären-Plasmas erfährt und die Zusammenfügung klebstofffrei und nur durch kurzzeitig danach erfolgendes Hindurchleiten der aufeinanderliegenden Einzelfolien durch einen Walzspalt erfolgt.

Die DE 10 2006 021 171 A1 betrifft eine Deckleiste aus thermoplastischem Kunststoff, welche mit einer zumindest einseitig auf die Deckleiste aufgebrachten Schmelzklebstoffschicht auf eine Platte, z. B. auf eine Schmalseite einer Möbelplatte oder dergleichen, aufklebbar ist. Die Deckleiste wird mit der Schmelzklebstoffschicht im Wege der Koextrusion hergestellt, wobei die Schmelzklebstoffschicht in der Farbe der Deckleiste eingefärbt ist.

Die DE 42 15 755 C1 betrifft ein zur Verklebung mit der Kante einer Holzplatte oder einer Holzwerkstoffplatte mit Hilfe eines Heißklebers eingerichtetes und dazu mit einer Klebefläche versehenes Kantenprofil, welches aus einem Polyolefin-Kunststoff, insbesondere aus Polypropylen, besteht und durch Strangpressen mit Hilfe eines Extruders hergestellt ist. Das Kantenprofil weist 10 bis 30 Gew.-% eines feinteiligen mineralischen Füllstoffs auf und die Klebefläche weist eine durch eine Korona-Gasentladung aufgeschlossene Oberfläche auf.

Schließlich betrifft die EP 0 897 781 A2 ein Verfahren zur Anbringung eines Kantenbandes an einer Kante und eine Vorrichtung zur Durchführung des Verfahrens. Bei der Durchführung des Verfahrens werden die Klebeflächen des zu beschichtenden Werkstücks und/oder des Kantenbandes auf eine Temperatur von über 25 °C erwärmt und anschließend mit einem erwärmten reaktiven Klebstoff beschichtet. Das Werkstück und das Kantenband werden dann zusammengefügt, so dass eine Kompositstruktur entsteht.

Der vorliegenden Erfindung liegt nunmehr die Aufgabe zugrunde, ein Verfahren zur Anbringung von Kantenbändern auf Schmalflächen von insbesondere plattenförmigen Werkstücken bereitzustellen, welches die zuvor geschilderten Nachteile der Verfahren des Standes der Technik zumindest weitgehend vermeidet oder aber wenigstens abschwächt.

Weiterhin liegt der Erfindung die Aufgabe zugrunde, kantenbandversehene Werkstücke mit verbesserter Qualität, insbesondere besserer Verklebung, sowie eine Vorrichtung zur Durchführung des erfindungsgemäßen Verfahrens zur Verfügung zu stellen.

Zur Lösung der zuvor geschilderten Aufgabe schlägt die vorliegende Erfindung gemäß einem ersten Erfindungsaspekt ein Verfahren nach Patentanspruch 1 vor; weitere vorteilhafte Ausgestaltungen sind Gegenstand der diesbezüglichen abhängigen Patentansprüche.

Ein weiterer Gegenstand der vorliegenden Erfindung ist gemäß einem zweiten Erfindungsaspekt eine Vorrichtung zur Durchführung des erfindungsgemäßen Verfahrens nach Patentanspruch 11; weitere vorteilhafte Ausgestaltungen sind Gegenstand der jeweiligen abhängigen Ansprüche.

Es versteht sich von selbst, daß besondere Ausgestaltungen und Ausführungsformen, welche nur im Zusammenhang mit einem Erfindungsaspekt beschrieben sind, auch in bezug auf die anderen Erfindungsaspekte entsprechend gelten, ohne daß dies ausdrücklich beschrieben ist.

Im übrigen gilt, daß der Fachmann anwendungsbezogen oder einzelfallbedingt von den nachfolgend aufgeführten Zahlen-, Wert- bzw. Bereichsangaben abweichen kann, ohne daß er den Rahmen der vorliegenden Erfindung verläßt.

Gegenstand der vorliegenden Erfindung ist somit - gemäß einem **ersten** Aspekt der vorliegenden Erfindung - ein Verfahren zur Anbringung eines Kantenbandes (Kantenstreifens) auf mindestens eine Schmalfläche (Schmalseite) eines insbesondere plattenförmigen Werkstücks (Werkstoffteils) durch Fügen, wobei das Kantenband auf seiner mit dem Werkstück zu verbindenden Seite mit einer wärmeaktivierbaren Klebstoffschicht beaufschlagt ist, welche vor dem Fügen durch Bestrahlung erwärmt wird, wobei die wärmeaktivierbare Klebstoffschicht plasmaaktivierbar ausgebildet ist, insbesondere die wärmeaktivierbare Klebstoffschicht mit mindestens einem energieabsorbierenden und/oder wärmeleitenden Stoff versehen ist, und wobei das Erwärmen der wärmeaktivierbaren Klebstoffschicht mittels Plasmabestrahlung erfolgt, wobei die Plasmasbestrahlung mittels einer Plasmaquelle mit mehreren Plasmadüsen erfolgt, wobei die Temperatur des Plasmas 200 bis 1.000 °C beträgt und/oder wobei die Plasmabestrahlung mit einer Energie von 0,5 bis 20 kWh auf die plasmaaktivierbare Klebstoffschicht einwirkt.

Unter dem Begriff des Fügens werden im Rahmen der vorliegenden Erfindung insbesondere Verfahren verstanden, welche einen Zusammenhalt zwischen zuvor getrennten Werkstücken schaffen, so daß ein neues Werkstück mit veränderter Form entsteht. Speziell werden im Rahmen der vorliegenden Erfindung unter dem Begriff des Fügens stoffschlüssige Fügeverfahren verstanden, insbesondere das Kleben.

Unter einer wärmeaktivierbaren Klebstoffschicht wird im Rahmen der vorliegenden Erfindung insbesondere eine Schicht aus mindestens einem Klebstoff verstanden, welche durch Aufnahme von Wärme in einen klebefähigen bzw. klebrigen Zustand übergeht bzw. deren Bestandteile durch Aufnahme von Wärme miteinander vernetzt werden. Erfindungsgemäß bevorzugt werden, wie später noch ausgeführt, reaktive und/oder nichtreaktive Schmelzklebstoffe eingesetzt.

Im Rahmen der vorliegenden Erfindung wird die Klebstoffschicht auf Temperaturen erwärmt (und bis zum Fügevorgang gehalten), bei denen die Klebstoffschicht in einem klebefähigen bzw. klebrigen, insbesondere hitzeklebrigen Zustand vorliegt. Vorteilhafterweise erfolgt der Erwärmungsvorgang der Klebstoffschicht mittels Plasmabestrahlung ummittelbar vor dem Fügen, damit Klebstoffschicht und Kantenband nicht übermäßig thermisch beansprucht werden.

Unter einem Plasma versteht man im Rahmen der vorliegenden Erfindung im allgemeinen insbesondere ein zumindest teilweise ionisiertes Gas mit freien Ladungsträgern, wie z. B. Ionen oder Elektronen. Der Plasmazustand wird auch als vierter Aggregatzustand - neben den klassischen Aggregatzuständen "fest", "flüssig" und "gasförmig" - bezeichnet und kann durch Energiezufuhr zu gasförmiger Materie erreicht werden. Der Übergang vom gasförmigen in den Plasmazustand kann auf vielfältige Weise, z. B. durch thermische Anregung, elektrische Entladungen, Absorption elektromagnetischer Strahlung, elektromagnetische Felder etc., erfolgen.

Plasmen und Plasmatechnologie besitzen ein breites technisches Anwendungsspektrum im häuslichen und industriellen Bereich: So werden Plasmen z. B. in der Beleuchtungstechnik (z. B. Leuchtstoff- und Energiesparlampen), Oberflächentechnik (z. B. Plasmaätzen, plasmainduzierte Materialabscheidungen, Oberflächenmodifizierung und -härtung) und in der Werkstoffverarbeitung (z. B. Plasmaschneiden und Lichtbogen-Schweißen) verwendet. Im Bereich der Kantenbandverarbeitung und -beschichtung ist die Plasmatechnologie bislang aber noch nicht als geeignete Anwendungsmöglichkeit angedacht bzw. realisiert worden.

Plasmen können in verschiedene Kategorien unterteilt werden, z. B. aufgrund des Druckes des Gases, aus welchem sie hervorgehen. Es wird zwischen Niederdruckplasma, Normalplasmen (wie z. B. Atmosphärendruckplasma) und Hochdruckplasma unterschieden.

Erfindungsgemäß wird bevorzugt insbesondere ein atmosphärisches Plasma, d. h. ein Plasma, welches unter Normaldruck und normalen atmosphärischen Bedingungen (z. B. bezüglich der Zusammensetzung der Umgebungsluft) erzeugt wird, oder aber ein Hochdruckplasma eingesetzt. Das Plasma kann dabei beispielsweise in einer von getrockneter Druckluft durchströmten Plasmadüse durch Anlegen einer hochfrequenten Hochspannung erzeugt und durch die Druckluft als Strahl aus der Plasmadüse herausgeleitet werden. Eine solche Plasmaquelle z. B. aus Plasmadüse, Hochspannungs-Hochfrequenzgenerator und Druckluftaufbereiter ist dem Fachmann an sich bekannt und wird z. B. von der Firma Plasmatreat GmbH, Steinhagen, Bundesrepublik Deutschland, vertrieben.

Bevorzugt besitzt das im Rahmen dieser Erfindung verwendete Plasma ein Emissionsspektrum mit Intensitätsmaxima im UV- und im IR-Bereich des elektromagnetischen Spektrums, insbesondere im Bereich von ca. 300 bis 400 nm (UV-Bereich) und ca. 750 bis 850 nm (IR-Bereich).

Der Energieanteil der UV- und IR-Strahlung an der Gesamtstrahlungsenergie des Plasmas kann in weiten Bereichen variieren. Im allgemeinen liegt der Anteil der UV- und IR-Strahlung an der Gesamtstrahlungsenergie des Plasmas bei mindestens 20 %, insbesondere mindestens 40 %, vorzugsweise mindestens 60 %. Insbesondere liegt der Anteil der UV- und IR-Strahlung an der Gesamtstrahlungsenergie des Plasmas im Bereich von 20 bis 95 %, insbesondere 40 bis 90 % , vorzugsweise 60 bis 85 %. Dennoch ist es anwendungsbezogen oder einzelfallbedingt nicht ausgeschlossen, von den vorgenannten Werten abzuweichen, ohne daß der Rahmen der vorliegenden Erfindung verlassen ist; dies zu entscheiden, liegt im fachmännischen Können bzw. im Ermessen des auf diesem Gebiet tätigen Fachmanns.

Unter Plasmaaktivierung soll im Rahmen der vorliegenden Erfindung verstanden werden, daß die Klebstoffschicht bzw. Bestandteile der wärmeaktivierbaren Klebstoffschicht imstande sind, die Energie, welche bei der Plasmabestrahlung auf die Klebstoffschicht einwirkt, zu absorbieren und in Wärmeenergie umzuwandeln. Dies bezieht sich sowohl auf die Energieeinwirkung der Teilchen des Plasmas (Moleküle, Molekülfragmente, Atome, Ionen, Elektronen etc.) als auch auf die der emittierten Strahlung (ausgelöst z. B. durch Fragmentierung von Molekülen bzw. Rekombination von Molekülfragmenten, Ionisation, atomare Energieübergänge etc.).

Unter einer plasmaaktivierbaren Klebstoffschicht ist somit eine Schicht aus einem Klebstoff zu verstehen, welcher die Energie des Plasmas aufzunehmen und in Wärmeenergie umzuwandeln imstande ist. Bestandteile des Klebstoffs bzw. beigemischte Zusätze oder Additive absorbieren also reversibel Energie, d. h. sie nehmen die Energie des Plasmas reversibel auf, wandeln sie nachfolgend in Wärmeenergie um und geben diese schließlich an ihre Umgebung ab.

Bevorzugt wird im Rahmen der vorliegenden Erfindung das Kantenband unmittelbar nach der Plasmaeinwirkung an das Werkstück angedrückt und hiermit zusammengefügt (d. h. mit dessen Schmalseite bzw. -fläche).

Das erfindungsgemäße Verfahren besitzt eine Reihe von Vorteilen, welche es gegenüber den Verfahren des Standes der Technik auszeichnet: Das erfindungsgemäße Verfahren ist äußerst kostengünstig und ermöglicht hohe Durchlaufraten, d. h. es eignet sich zum großtechnischen Einsatz mit hohen Stückzahlen. Durch die Plasmaaktivierung der Klebstoffschicht wird wesentlich weniger Klebstoff als bei herkömmlichen Verfahren benötigt, und die erzielte Verklebung ist wesentlich beständiger als bei herkömmlichen Verfahren, insbesondere werden Fehlklebungen drastisch reduziert bzw. ausgeschlossen. Der weitaus geringere Klebstoffauftrag des erfindungsgemäßen Verfahrens verhindert auch das im Stand der Technik übliche Überquellen des Klebstoffs aus der Klebefuge, welches eine aufwendige Vor- und Nachbehandlung des Werkstücks erforderlich macht. Darüber hinaus können durch den geringeren Klebstoffverbrauch wesentlich dünnere Klebefugen erzielt werden, welche mit dem bloßen Auge nicht mehr zu erkennen sind und auch als sogenannte Nullfuge bezeichnet werden. Zudem werden qualitativ verbesserte Verklebungen, insbesondere höhere Schälfestigkeiten und höhere Dichtigkeiten, erhalten. Ein weiterer Vorteil ist, daß der Einbau einer Plasmaquelle in eine bestehende Produktionsanlage problemlos möglich ist, wobei noch hinzukommt, daß die Kosten für die Installation und den Betrieb der Plasmaquelle vergleichsweise gering sind.

Die genannten Vorteile, welche später noch ausführlich dargelegt werden, sind allesamt ursächlich auf die Plasmabehandlung der Klebstoffschicht zurückzuführen. Es hat sich nämlich insbesondere überraschenderweise gezeigt, daß der Plasmastrahl nur eine relativ geringe Eindringtiefe in die Klebstoffschicht besitzt und lediglich eine genügende Menge Klebstoff sehr schnell erwärmt, wie sie zur Erreichung einer dauerhaften Verklebung benötigt wird. Das Kantenband dagegen wird durch die Plasmabestrahlung im wesentlichen nicht oder nur in geringem Maße erwärmt, so daß das Werkstück sofort weiter verarbeitet werden kann, ohne erst das Abkühlen des Kantenbandes oder ein langwieriges Aushärten des Klebstoffs abwarten zu müssen.

Im allgemeinen kann bei der Durchführung des erfindungsgemäßen Verfahrens insbesondere ein Kantenband aus einem thermoplastischen oder duroplastischem Kunststoff oder aus Holz oder aus Papier oder Pappe verwendet werden.

Im Rahmen der Erfindung hat es sich als besonders vorteilhaft erwiesen, wenn als Kantenband ein Kantenband aus thermoplastischem oder duroplastischem Kunststoff, insbesondere auf Basis von (i) Polyolefinen, bevorzugt Polyethylen (PE) oder Polypropylen (PP); (ii) Polymethacrylaten (PMA); (iii) Polymethylmethacrylaten (PMMA); (iv) Polyvinylchlorid (PVC); (v) Polyvinylidenhalogenid, insbesondere Polyvinylidenfluorid (PVDF) oder Polyvinylidenchlorid (PVDC); (vi) AcrylnitrilButadien/Styrol-Copolymer (ABS); (vii) Polyamiden (PA), Polycarbonaten (PC); (viii) Melamin-Formaldehydharzen; (ix) Epoxidharzen; (x) Phenolharzen oder (xi) Harnstoffharzen, verwendet wird.

Erfindungsgemäß kann es vorgesehen sein, als Werkstück ein Werkstück aus Holz, Holzersatzstoffen, Kunststoffen oder Glas zu verwenden. Gemäß einer besonders bevorzugten Ausführungsform der vorliegenden Erfindung wird ein Werkstück aus Holz oder Holzersatzstoffen verwendet.

In erster Linie sollen im Rahmen der Erfindung unter dem Begriff der Holzersatzstoffe Holzfaserwerkstoffe verstanden werden, d. h. Werkstoffe, welche Holzfasern als Bestandteile enthalten, wie z. B. Spanplatten, MDF-Platten (Medium-Density-Fiber-Boards bzw. Mitteldichte Faserplatten) oder OSB-Platten (Oriented-Strand-Boards bzw. Grobspanplatten). Möglich ist allerdings auch der Einsatz eines Holzersatzstoffs auf Basis eines Kunststoffs, wobei alle Kunststoffe, welche auch als Materialen für die Kantenbänder geeignet sind, in Betracht kommen.

Im Rahmen der vorliegenden Erfindung kann die plasmaaktivierbare Klebstoffschicht mindestens einen Schmelzklebstoff aufweisen bzw. hieraus bestehen, wobei vorzugsweise reaktive oder nichtreaktive Schmelzklebstoffe zum Einsatz kommen können.

Es hat sich als besonders vorteilhaft herausgestellt, wenn die plasmaaktivierbare Klebstoffschicht mindestens einen Schmelzklebstoff auf Basis von Olefinen, insbesondere vorzugsweise amorphen Poly-α-olefinen (APAO), Polyamiden (PA), Polyurethan-Elastomeren (TPU), Polyester-Elastomeren (TPE), Copolyamid-Elastomeren (CoPa) und/oder Ethylen/Vinylacetat-Copolymeren (EVA) aufweist.

Insbesondere kann als Klebstoffschicht auch ein einkomponentiges oder zweikomponentiges Polyurethan-Prepolymer vorgesehen werden, welches reaktive, noch relativ kurzkettige Moleküle aufweist, die nach der chemischen Reaktion zu hochbeständigen, langkettigen Molekülen, den Polymeren, vernetzen.

Was die Dicke der plasmaaktivierbaren Klebstoffschicht anbelangt, so kann diese im Rahmen der vorliegenden Erfindung in weiten Bereichen variieren. Im allgemeinen besitzt die plasmaaktivierbare Klebstoffschicht eine Dicke von höchstens 200 µm, insbesondere höchstens 150 µm, vorzugsweise höchstens 100 µm. Insbesondere liegt die Dicke der plasmaaktivierbaren Klebstoffschicht im Bereich von 0,1 bis 200 µm, insbesondere 1 bis 150 µm, vorzugsweise 2 bis 100 µm. Zu geringe Dicken erlauben im allgemeinen keine ausreichende bzw. zuverlässige Verklebung bzw. Haftung, während übermäßige Dicken keine weitergehende Steigerung der Verklebung bzw. Haftung, sondern oftmals schlechtere Qualitäten des Fügeverbunds bewirken, insbesondere durch Klebstoffüberschuß (z. B. Herausquellen des Klebstoffs aus der Fügefuge etc.). Dennoch ist es anwendungsbezogen oder einzelfallbedingt nicht ausgeschlossen, von den vorgenannten Werten abzuweichen, ohne daß der Rahmen der vorliegenden Erfindung verlassen ist; dies zu entscheiden, liegt im fachmännischen Können bzw. im Ermessen des auf diesem Gebiet tätigen Fachmanns.

Was die Auftragsmenge der plasmaaktivierbaren Klebstoffschicht anbelangt, so kann auch diese im Rahmen der vorliegenden Erfindung in weiten Bereichen variieren. Im allgemeinen wird die plasmaaktivierbare Klebstoffschicht in einer Menge von höchstens 300 g/m², insbesondere höchstens 200 g/m², vorzugsweise höchstens 150 g/m², aufgetragen. Insbesondere wird die plasmaaktivierbare Klebstoffschicht in einer Auftragsmenge im Bereich von 1 bis 300 g/m², insbesondere 5 bis 200 g/m², vorzugsweise 10 bis 150 g/m², aufgetragen. Auch hier ist es anwendungsbezogen oder einzelfallbedingt nicht ausgeschlossen, von den vorgenannten Werten abzuweichen, ohne daß der Rahmen der vorliegenden Erfindung verlassen wird; dies zu entscheiden, liegt im fachmännischen Können bzw. im Ermessen des auf diesem Gebiet tätigen Fachmanns.

In dem erfindungsgemäßen Verfahren können das Kantenband und die plasmaaktivierbare Klebstoffschicht vor dem Fügevorgang Werkstückschmalseite/Kantenband dauerhaft und/oder untrennbar miteinander verbunden werden. Insbesondere kann ein Kantenband zum Einsatz kommen, welches bereits auf seiner mit dem Werkstück zu verbindenden Seite (Kontaktseite) mit der wärmeaktivierbaren Klebstoffschicht beaufschlagt worden ist (d. h. also ein bereits vorgefertigtes bzw. unabhängig hergestelltes klebstoffbeaufschlagtes Kantenband).

Dabei hat es sich als besonders vorteilhaft erwiesen, wenn die Beaufschlagung des Kantenbandes mit der plasmaaktivierbaren Klebstoffschicht durch Koextrusion erfolgt bzw. erfolgt ist. Gerade durch die Koextrusion des Kantenbandes und der plasmaaktivierbaren Klebstoffschicht wird eine überaus gleichmäßige Beaufschlagung des Kantenbandes bei gleichzeitiger minimaler Schichtdicke der Klebstoffschicht erreicht. Durch die Koextrusion ist die Haftung der Klebstoffschicht auf dem Kantenband besser als bei herkömmlichen Verfahren, so daß üblicherweise kein zusätzlicher Haftvermittler (Primer) verwendet werden muß.

Nur eine Plasmabehandlung wiederum der Klebstoffschicht erlaubt es, derart dünne Klebstoffschichten gezielt zu erwärmen, ohne das Kantenband gleichzeitig mitzuerwärmen bzw. durch Wärmeentwicklung zu beschädigen.

Auch wenn die Koextrusion von Kantenband und plasmaaktivierbarer Klebstoffschicht erfindungsgemäß bevorzugt ist, sind jedoch auch andere Ausführungsformen möglich. So kann z. B. das Kantenband zunächst mit einem Haftvermittler (Primer) beaufschlagt bzw. beschichtet werden und anschließend erst die Klebstoffschicht in Form einer Klebefolie, einer Lösung oder Dispersion eines Klebstoffs oder als flüssiger Schmelzklebstoff aufgetragen werden. Ebenso ist es möglich, das Kantenband bei geeigneter Oberflächenstruktur mit einer Klebstoffschicht zu beaufschlagen, ohne daß ein Haftvermittler (Primer) verwendet wird (z.B. nach Corona-Behandlung bzw. nach Aufrauen der mit Klebstoff zu beaufschlagenden Oberfläche des Kantenbandes).

Erfindungsgemäß ist die wärmeaktivierbare Klebstoffschicht mit mindestens einem energieabsorbierenden und/oder wärmeleitenden Stoff versehen, welcher im folgenden näher beschrieben wird.

Es kann erfindungsgemäß vorgesehen sein, daß der energieabsorbierende und/oder wärmeleitende Stoff der Klebstoffschicht energieabsorbierend und wärmeleitend ausgebildet ist.

Gemäß einer bevorzugten Ausführungsform der vorliegenden Erfindung ist der energieabsorbierende und/oder wärmeleitende Stoff der Klebstoffschicht imstande, reversibel Energie zu absorbieren.

Dabei hat es sich als besonders vorteilhaft erwiesen, wenn der energieabsorbierende und/oder wärmeleitende Stoff der Klebstoffschicht Inhaltsstoff bzw. (integraler) Bestandteil der Klebstoffschicht, insbesondere des Schmelzklebstoffs, ist.

Gemäß einer besonderen Ausführungsform der vorliegenden Erfindung umfaßt der energieabsorbierende und/oder wärmeleitende Stoff der Klebstoffschicht einzelne und/oder diskrete Partikel oder besteht hieraus.

Bei den in den Kunststoff der wärmeaktivierbaren Klebstoffschicht integrierten, wärmeleitenden Partikeln kann es sich insbesondere um Metallpartikel handeln, deren Verteilung in dem Klebstoff bevorzugt gleichmäßig sein kann. Eine ungleichmäßige Verteilung bzw. Verteilung mit Gradienten kommt auch dann in Betracht, wenn - je nach der Dicke der Klebstoffschicht - z. B. die von der Beaufschlagungsseite durch den Plasmastrahl weiter abliegenden Zonen ebenfalls noch in einem ausreichenden Maße erhitzt werden sollen oder aber gerade dies nicht erfolgen soll. Dies ist mit von der Wärmeleitfähigkeit des Klebstoffes abhängig, des weiteren auch davon, inwieweit der Klebstoff der Klebstoffschicht entweder nur an der vom Material des Kantenbandes selbst abliegenden, freien Oberseite plastifiziert oder verflüssigt werden soll oder auch in tieferliegenden Zonen.

Als wärmeleitende Partikel, die in den Kunststoff der Klebstoffschicht eingelagert werden, kommen insbesondere Metallpartikel, vorzugsweise Aluminiumpartikel, in Betracht.

Die Korngröße der wärmeleitenden Partikel wird an die jeweils erforderliche Wärmeleitfähigkeit der gesamten Klebstoffschicht angepaßt. So können die Metallpartikel in Form eines Pulvers oder eines Granulats in den Kunststoff der Klebstoffschicht eingemischt und somit darin eingelagert werden.

Im Rahmen der vorliegenden Erfindung geeignete plasmaaktivierbare Klebstoffe, insbesondere wärme- bzw. plasmaaktivierbare Klebstoffe mit energieabsorbierenden bzw. wärmeleitenden Stoffen/Substanzen, sind im Handel erhältlich und werden beispielsweise von der Jowat AG, Detmold, Bundesrepublik Deutschland, vertrieben.

Das erfindungsgemäße Verfahren kann grundsätzlich sowohl als kontinuierliches Verfahren, insbesondere als Durchlaufverfahren, als auch als stationäres Verfahren betrieben werden.

Im Rahmen der vorliegenden Erfindung ist unter einem Durchlaufverfahren insbesondere ein Verfahren für den maschinellen Durchlauf zu verstehen. Die Werkstücke werden in einem kontinuierlichen Fluß, z. B. mittels einer Förderoder Fließbandeinrichtung, zu einer Kantenbefestigungseinrichtung transportiert, dort mit einem Kantenband versehen und verlassen die Einrichtung wieder in einem kontinuierlichen Fluß von Werkstücken.

Im Gegensatz hierzu wird ein stationäres Verfahren an einer im allgemeinen mobilen Bearbeitungseinrichtung (z. B. einer Kantenbefestigungseinrichtung) durchgeführt. Hierzu werden die Werkstücke einzeln zu der Bearbeitungsstation transportiert, dort bearbeitet und anschließend einzeln wieder abtransportiert. Üblicherweise ruht das Werkstück während des Bearbeitens in der Bearbeitungseinrichtung, während Teile der Bearbeitungseinrichtung am Werkstück entlanglaufen; möglich ist jedoch auch beim stationären Verfahren, daß das Werkstück im Zuge der Bearbeitung mehrere Meter aus der Ruheposition ausgelenkt wird.

Nach einer bevorzugten Ausführungsform wird das erfindungsgemäße Verfahren als Durchlaufverfahren betrieben, vorzugsweise in kontinuierlichem Betrieb.

Der Vorschub, mit dem das erfindungsgemäße Verfahren durchgeführt wird, kann im Rahmen der vorliegenden Erfindung in weiten Bereichen variieren. Im allgemeinen wird das erfindungsgemäße Verfahren mit einem Vorschub von mindestens 5 m/min, insbesondere mindestens 10 m/min, bevorzugt mindestens 20 m/min, ganz besonders bevorzugt mindestens 30 m/min, durchgeführt. Insbesondere wird das Verfahren mit einem Vorschub im Bereich von 5 bis 100 m/min, insbesondere 10 bis 75 m/min, bevorzugt 15 bis 60 m/min, ganz besonders bevorzugt 20 bis 50 m/min, durchgeführt. Geringere Vorschübe entsprächen einem stationären Verfahren, während ein größerer Vorschub mit den am Markt erhältlichen Vorrichtungen zumindest derzeit noch nicht realisiert werden kann. Dennoch ist es anwendungsbezogen oder einzelfallbedingt möglich, von den vorgenannten Werten abzuweichen, ohne den Rahmen der vorliegenden Erfindung zu verlassen. Die Entscheidung hierüber obliegt dem auf diesem Gebiet tätigen Fachmann im Rahmen seines fachmännischen Könnens bzw. Ermessens.

Im Rahmen des erfindungsgemäßen Verfahrens wird also - wie zuvor beschreiben-die wärmeaktivierbare Klebstoffschicht mittels Plasmabestrahlung erwärmt, welche im folgenden näher beschrieben wird.

Im Rahmen der vorliegenden Erfindung erfolgt die Plasmabestrahlung mittels einer Plasmaquelle mit mehreren Plasmadüse.

Was die Temperatur des Plasmas, insbesondere bei Austritt aus der oder den Plasmadüse(n) anbelangt, so kann diese im Rahmen der vorliegenden Erfindung in weiten Bereichen variieren. Erfindungsgemäß liegt die Temperatur des Plasmas, insbesondere bei Austritt aus den Plasmadüse(n), im Bereich von 200 bis 1.000 °C, insbesondere 300 bis 900 °C, vorzugsweise 400 bis 800 °C. Dennoch kann einzelfallbedingt oder anwendungsbezogen von den genannten Werten abgewichen werden, ohne daß der Rahmen der vorliegenden Erfindung verlassen wird; dies zu entscheiden, liegt im fachmännischen Können bzw. Ermessen des auf diesem Gebiet tätigen Fachmanns.

Ebenso kann die Energie, mit welcher die Plasmastrahlung auf die plasmaaktivierbare Klebstoffschicht einwirkt, in weiten Bereichen variieren. Erfindungsgemäß wirkt die Plasmabestrahlung mit einer Energie von 0,5 bis 20 kWh, insbesondere 1 bis 10 kWh, auf die plasmaaktivierbare Klebstoffschicht ein.

In Abhängigkeit von der Energie der Plasmastrahlung kann auch die elektrische Energieaufnahme der Plasmaquelle im Rahmen der vorliegenden Erfindung in weiten Bereichen variieren. Im allgemeinen wird zur Erzeugung der Plasmabestrahlung eine Plasmaquelle mit einer elektrischen Energieaufnahme von 0,5 bis 20 kWh, insbesondere 1 bis 10 kWh, eingesetzt.

Dennoch kann auch hier einzelfallbedingt oder anwendungsbezogen von den genannten Werten für die Energieeinwirkung der Plasmastrahlung auf die plasmaaktivierbare Klebstoffschicht und die elektrische Energieaufnahme der Plasmaquelle abgewichen werden, ohne daß der Rahmen der vorliegenden Erfindung verlassen wird; dies zu entscheiden, liegt im fachmännischen Können bzw. Ermessen des auf diesem Gebiet tätigen Fachmanns.

Gemäß einer besonders bevorzugten Ausführungsform der vorliegenden Erfindung erfolgt die Plasmabestrahlung mittels einer Plasmaquelle mehreren Plasmadüsen, wobei der Abstand der Plasmaquelle, insbesondere deren Düse(n), zur Klebstoffschicht im Bereich von 0,5 bis 20 mm, insbesondere 1 bis 10 mm, vorzugsweise 2 bis 8 mm, besonders bevorzugt 3 bis 6 mm, eingestellt wird.

Es hat sich im Rahmen der vorliegenden Erfindung als vorteilhaft erwiesen, wenn das Fügen, insbesondere das Anbringen des Kantenbandes auf die Schmalfläche, unter Andrücken erfolgt. Dies ist dem Fachmann also solches geläufig.

Die nach dem erfindungsgemäßen Verfahren hergestellten Werkstücke unterscheiden sich deutlich von den nach herkömmlichen Verfahren hergestellten Werkstücken. Wie oben bereits ausgerührt, wird bei Durchführung des erfindungsgemäßen Verfahrens wesentlich weniger Klebstoff benötigt, d. h. die aufgetragene Klebstoffschicht kann wesentlich dünner sein ("Nullfuge"). Durch die geringere Klebstoffmenge tritt nicht der Effekt auf, daß Klebstoff beim Andrücken des Kantenbandes aus der Klebefuge herausquillt und das Werkstück verschmutzt. Bei Verfahren des Standes der Technik wird dies verhindert, indem das Werkstück aufwendig mit einem Trennmittel vorbehandelt wird und in einer Nachbehandlung überschüssiger Klebstoff und Trennmittel wieder entfernt werden. Ferner wird durch die dünnere Klebstoffschicht eine schmalere Klebefuge erhalten, welche mit bloßem Auge kaum oder nicht wahrnehmbar ist und Nullfuge genannt wird. Die Nullfuge ist nicht nur ästhetisch ansprechender als herkömmliche Klebefugen, sondern aufgrund der geringeren Angriffsfläche gegenüber mechanischen Belastungen wesentlich beständiger und wird daher als Ziel bei Beschichtungsvorgängen formuliert. Da das Kantenband und die plasmaaktivierbare Klebstoffschicht erfindungsgemäß bevorzugt durch Koextrusion hergestellt werden, ist die Klebstoffschicht äußerst gleichmäßig und weist nicht, wie z. B. bei einem Rakel- oder Walzenauftrag des Klebstoffs, eine Rasterung bzw. ein Muster auf. Hierdurch ist auch die resultierende Verklebung äußerst gleichmäßig und beständig und weist insbesondere an ihren Rändern keine offenporigen Strukturen, welche durch die Auftragsart bedingt sind, auf. Es resultieren verbesserte Verklebungen, insbesondere mit verbesserten Schälfestigkeiten und verbesserten Dichtigkeiten.

Die nach dem erfindungsgemäßen Verfahren erhältliche Klebefuge ist somit wesentlich weniger anfällig gegen das Eindringen von Feuchtigkeit und Schmutz, so daß die Verklebung und damit auch die Werkstücke eine sehr viel höhere Lebensdauer besitzen.

Ferner wird bei dieser Art der plasmaaktivierten Verklebung, insbesondere bei vorangehender Koextrusion von Kantenband und Klebstoffschicht, kein vorheriger Haftvermittler benötigt, um das Kantenband oder auch das Werkstück auf die Verklebung vorzubereiten. Das erfindungsgemäße Verfahren führt zu überaus dauerhaften Verklebungen, welche praktisch frei sind von Fehlstellen. Überraschenderweise wurde gefunden, daß durch die Plasmaaktivierung nicht nur die Haftung der Klebstoffschicht mit einem Werkstück, sondern auch die Haftung des Kantenbandes an der Klebstoffschicht deutlich verbessert wird.

Weiterer Gegenstand der vorliegenden Erfindung - gemäß einem zweiten Aspekt der vorliegenden Erfindung - ist eine Vorrichtung zur Anbringung eines Kantenbandes (Kantenstreifens) auf mindestens eine Schmalfläche (Schmalseite) eines insbesondere plattenförmigen Werkstücks (Werkstoffteils) durch Fügen, insbesondere zur Durchführung des zuvor beschriebenen erfindungsgemäßen Verfahrens, wobei die Vorrichtung
- mindestens eine Einrichtung zur Bevorratung und/oder vorzugsweise kontinuierlichen Abgabe eines Kantenbandes,
- mindestens eine Bestrahlungsquelle zur Erwärmung einer Klebstoffbeschichtung eines Kantenbandes,
- mindestens eine Andrückeinrichtung zum Andrücken eines Kantenbandes an eine Schmalfläche des Werkstücks und
- mindestens eine Transporteinrichtung zur Bewegung und/oder zum Transport des Werkstücks
aufweist, wobei die Energiequelle eine Plasmaquelle ist, wobei die Plasmaquelle zur Erzeugung von Plasmatemperaturen von 200 bis 1.000 °C und/oder zur Erzeugung einer Energie von 0,5 bis 20 kWh imstande ist und wobei die Plasmaquelle mehrere Düsen aufweist, wobei die Düsen verschiebbar ausgebildet sind und wobei die Düsen zwischen einer Schmalseite des Werkstücks und dem Kantenband positionierbar und/oder positioniert sind.

Was die Anzahl der Plasmadüsen der Plasmaquelle anbelangt, so kann ihre Anzahl in weiten Bereichen variieren. Erfindungsgemäß weist die Plasmaquelle mehrere Düsen, insbesondere zwei bis zehn Düsen, auf.

Erfindungsgemäß sind die Düsen der Plasmaquelle zwischen einer Schmalseite des Werkstücks und dem Kantenband positionierbar und/oder sind die Düsen der Plasmaquelle verschiebbar, insbesondere in alle Raumrichtungen verschiebbar, ausgebildet.

Der Abstand der Plasmaquelle, insbesondere deren Düse(n), zum Kantenband, kann in weiten Bereichen variieren. Im allgemeinen ist der Abstand der Plasmaquelle, insbesondere deren Düse(n), zum Kantenband, insbesondere dessen Klebstoffschicht, im Bereich von 0,5 bis 20 mm, insbesondere 1 bis 10 mm, vorzugsweise 2 bis 8 mm, besonders bevorzugt 3 bis 6 mm, einstellbar. Einzelfallbedingt oder anwendungsbezogen ist es jedoch möglich, von den genannten Werten abzuweichen, ohne den Rahmen der vorliegenden Erfindung zu verlassen; dies zu entscheiden, liegt im fachmännischen Können bzw. Ermessen des auf diesem Gebiet tätigen Fachmanns.

Die Plasmaquelle ist erfindungsgemäß imstande, Plasmatemperaturen, insbesondere bei Austritt aus den Düsen, von 200 bis 1.000 °C, insbesondere 300 bis 900 °C, vorzugsweise 400 bis 800 °C, zu erzeugen.

Erfindungsgemäß ist die Plasmaquelle imstande, eine Energie von 0,5 bis 20 kWh, insbesondere 1 bis 10 kWh, zu erzeugen.

Die Plasmaquelle der erfindungsgemäßen Vorrichtung kann eine elektrische Energieaufnahme von 0,5 bis 20 kWh, insbesondere 1 bis 10 kWh, aufweisen.

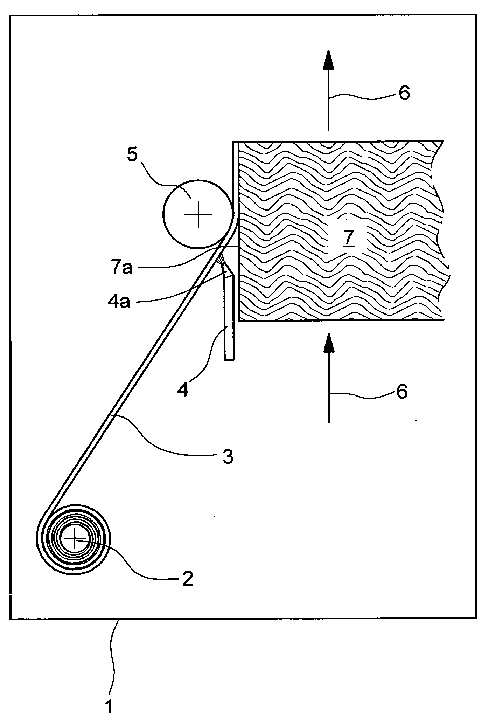

Die einzige Figur zeigt schematisch den Ablauf des erfindungsgemäßen Verfahrens bzw. die erfindungsgemäße Vorrichtung zur Kantenbandanbringung:
Gemäß der einzigen Figurendarstellung weist die erfindungsgemäße Vorrichtung 1 zur Anbringung eines Kantenbandes bzw. Kantenstreifens 3 auf mindestens eine Schmalfläche bzw. Schmalseite 7a eines insbesondere plattenförmigen Werkstücks bzw. Werkstoffteils 7 durch Fügen mindestens eine Einrichtung 2 zur Bevorratung und/oder vorzugsweise kontinuierlichen Abgabe eines Kantenbandes 3, und mindestens eine Bestrahlungsquelle 4 zur Erwärmung einer Klebstoffbeschichtung eines Kantenbandes 3, weiterhin mindestens eine Andrückeinrichtung 5 zum Andrücken eines Kantenbandes 3 an eine Schmalfläche 7a des Werkstücks 7 sowie mindestens eine Transporteinrichtung 6 zur Bewegung bzw. zum Transport des Werkstücks 7 auf, wobei die Energiequelle 4 eine Plasmaquelle ist bzw. als Plasmaquelle ausgebildet ist.

Wie die Figurendarstellung zeigt, weist die Plasmaquelle 4 mindestens eine Düse 4a, vorzugsweise mehrere Düsen 4a, insbesondere zwei bis zehn Düsen 4a, auf. Die Plasmaquelle 4, insbesondere deren Düse(n) 4a, ist zwischen einer Schmalseite 7a des Werkstücks 7 und dem Kantenband 3 positionierbar bzw. positioniert. Insbesondere ist die Plasmaquelle 4, insbesondere deren Düse(n) 4a, verschiebbar, insbesondere in alle Raumrichtungen verschiebbar, ausgebildet.

Für weitergehende diesbezügliche Einzelheiten zu der erfindungsgemäßen Vorrichtung kann auf die obigen Ausführungen zu dem erfindungsgemäßen Verfahren Bezug genommen werden.

Wie sich aus der schematischen Figurendarstellung ergibt, erfolgt der Ablauf des erfindungsgemäßen Verfahrens üblicherweise wie folgt: Das Kantenband 3 wird, vorzugsweise kontinuierlich, von der betreffenden Bevorratungs- bzw. Abgabeeinrichtung 2, insbesondere im Durchlaufverfahren, abgegeben, von wo es die Düse(n) 4a der Plasmaquelle 4 passiert, so daß die Klebstoffbeschichtung der Kontaktseite des Kantenbandes 3 aufgeschmolzen und nachfolgend mittels der Andrückeinrichtung 5 an die Schmalfläche 7a des Werkstücks 7 angedrückt wird, welches mittels der Transporteinrichtung 6 fortbewegt wird, so daß das Kantenband 3 der Länge nach auf die Schmalfläche 7a angebracht werden kann. Für weitergehende diesbezügliche Einzelheiten zum erfindungsgemäßen Verfahrensablauf kann zur Vermeidung unnötiger Wiederholungen auf die obigen Ausführungen verwiesen werden.

Das erfindungsgemäße Verfahren besitzt eine Vielzahl von Vorteilen, welche als Indiz der Patentfähigkeit zu werten sind:
Die Eindringtiefe des Plasmastrahls ist sehr genau einstellbar, so daß das Kantenband zumindest im wesentlichen nicht erwärmt wird, sondern nur die plasmaaktivierbare Verbindungs- bzw. Klebstoffschicht. Daher kann das beschichtete Werkstück sofort weiterverarbeitet, z. B. gefräst, werden.

Es treten bei Verwendung des erfindungsgemäßen Verfahrens keine Fehler wie unzulängliche Verbindungen aufgrund zu kaltem oder zu warmem oder sogar verbranntem Klebstoff, auf.
Da die plasmaaktivierbare Verbindungs- bzw. Klebstoffschicht unmittelbar aktiviert wird, erfolgt zumindest im wesentlichen keine mittelbare Erwärmung durch das Kantenband hindurch, so dass vergleichsweise wenig Energie benötigt wird. Der Energieverbrauch liegt im allgemeinen bei 1 bis 2 kWh (im Vergleich zu ca. 90 kWh bei einer Wärmebehandlung einer Klebstoffschicht mittels Laserbehandlung).

Das Kantenband sowie das Werkstück werden sofort verbunden. Aufgrund der entfallenen Abkühlzeit werden Stillstandzeiten optimiert.

Durch die unmittelbare und schnelle Erwärmung der Klebstoffschicht kann ein weitaus größeres Spektrum an Klebstoffen als bei Verfahren des Standes der Technik verarbeitet werden.

Das Plasma, insbesondere seine Temperatur oder Energieabstrahlung, muß nicht aufwendig auf jeden einzelnen Klebstoff abgestimmt werden, sondern ist universell einsetzbar.

Die plasmaaktivierbare Klebstoffschicht ist im Vergleich zu herkömmlichen Klebstoffschichten sehr dünn, so daß kaum eine Verbindungsnaht erkennbar ist und ein nahezu fugenloses Verbinden möglich ist ("Nullfuge").

Durch das schnelle Aushärten der dünneren Klebstoffschicht wird die nachgeschaltete Fräseeinrichtung zum Bündigfräsen des Kantenbandes nicht durch noch nicht ausgehärteten Klebstoff zugesetzt bzw. verunreinigt.

Das Verfahren eignet sich auch in Bereichen hoher Luftfeuchtigkeit. Weiterhin ist die Verbindung des Kantenbandes mit der Werkstückoberfläche sehr beständig gegen Wärme und Kälte.

Der Abstand der Plasmadüse zur Fügefläche ist sehr unkritisch wählbar und liegt im Bereich von 0,5 bis 20 Millimetern.

Das Verfahren ist wenig sicherheitskritisch: Bei Hautkontakt mit dem Plasmastrahl treten geringe Hautverbrennungen auf. Im Vergleich dazu erfordert der Einsatz von Laserkanonen eine aufwändige Abschirmung.

Die erfindungsgemäße Vorrichtung ist zudem nicht wartungsanfällig und kann überdies auch ohne weiteres nachträglich in bereits bestehende Anlagen des Standes der Technik eingebaut bzw. integriert werden.

Weitere Ausgestaltungen, Abwandlungen, Variationen sowie Vorteile der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der folgenden Ausführungsbeispiele veranschaulicht, welche die vorliegende Erfindung jedoch nicht beschränken.

### Ausführungsbeispiele:

Nachfolgend werden Ausführungsbeispiele der vorliegenden Erfindung mit herkömmlichen Verfahren zur Anbringung von Kantenbändern an plattenförmigen Werkstücken sowie die auf diese Weise erhältlichen kantenbandbeaufschlagten Werkstücken verglichen. Insbesondere werden das erfindungsgemäße Verfahren und die mit diesem Verfahren erhältlichen Werkstücke mit Verfahren, welche eine Erwärmung der Klebstoffschicht durch UV-Strahlung, IR-Strahlung, Heißluftgebläse, Mikrowellen und Laserstrahlung verwenden, und den hiermit erhältlichen Werkstücken verglichen.

Bei allen Versuchen wird ein 3 cm breites und 2 m langes Kantenband auf die 2 cm breite Schmalfläche einer Spanplatte angebracht und nachfolgend bündig gefräst.

In einer ersten Versuchsreihe werden die Kantenbänder zunächst mit einem Haftvermittler (Primer) behandelt und mit jeweils einem von zwei unterschiedlichen handelsüblichen Schmelzklebstoffen der Jowat AG, Detmold, Bundesrepublik Deutschland, beaufschlagt (z. B. durch Rakeln, Sprühen, Walzen etc.). Das Wiederaufschmelzen (Aktivierung) der Hotmelt-Schmelzklebstoffe erfolgt dann mittels UV-Strahlung, IR-Strahlung, Heißluftgebläse, Mikrowellen oder Laserstrahlen (Vergleich) oder erfindungsgemäß mittels Plasmabestrahlung.

Das Fügen erfolgt in einer Vorrichtung, welche der schematischen Darstellung der einzigen Figurendarstellung entspricht, d. h. die Klebstoffschicht wird unmittelbar vor dem Zusammentreffen mit dem Werkstück bis in den hitzeklebrigen Zustand erwärmt und das Kantenband anschließend an das Werkstück angedrückt. Die Dauer der Erwärmung der Klebstoffschicht und der Vorschub des Werkstücks wird in Abhängigkeit von der Art der eingesetzten Energiequelle derart eingestellt, daß unter den gegebenen Testbedingungen möglichst optimale Verklebungsergebnisse erzielt werden.

Im Anschluß werden alle Versuche noch einmal wiederholt, wobei jedoch abweichend das Kantenband nicht verklebt bzw. zusammmengefügt wird, sondern unmittelbar nach Beendigung der Energiezufuhr die Temperatur der Klebstoffschicht des Kantenbandes mittels einer Infrarotaufnahme bestimmt wird.

In einer weiteren Versuchsreihe, jedoch nur bei erfindungsgemäßer Verfahrensweise, werden vergleichend einerseits solche Kantenbänder verwendet, welche in der zuvor beschriebenen Weise mit Hotmelt-Schmelzklebstoffen beaufschlagt werden, und andererseits Kantenbänder eingesetzt, welche durch Koextrusion des Kantenbandes und der Klebstoffschicht (d. h. ohne Haftvermittler bzw. Primer) hergestellt sind.

Als Plasmaquelle wird bei allem Versuchen ein Openair^{®}-System der Firma Plasmatreat GmbH, Steinhagen, Bundesrepublik Deutschland, verwendet. Die Temperatur des Plasmas beträgt jeweils ca. 650 °C beim Verlassen der Düse und ca. 400 °C in 6 mm Abstand.

Die Ergebnisse der Versuchsreihen sind in Tabelle 1 zusammengefaßt.

Zusätzlich werden die Verfahren bzw. die hiermit hergestellten Werkstücke noch hinsichtlich der Qualität der Verklebung und der Verfahrensökonomie bewertet. Zur Bestimmung der Qualität der Verklebung wurde die Schälfestigkeit der Verklebung, die Wasseraufnahme durch die Verklebung sowie die Klebefuge untersucht. Bei der Beurteilung der Verfahrensökonomie wurden die Durchführbarkeit und Flexibilität der Verfahren sowie der Kostenaufwand (z. B. Anschaffungs- und Energiekosten) bewertet.

Es zeigt sich, daß bei Verwendung eines mit Klebstoff beaufschlagten Kantenbandes lediglich die Verfahren mit einer Plasmaaktivierung oder einer Aktivierung durch Laserstrahlung der Klebstoffschicht für eine Verfahrensdurchführung im maschinellen Durchlauf geeignet sind, da nur sie die Klebstoffschicht in ausreichend kurzer Zeit erwärmen können (ca. 0,1 bis 0,2 s). Bei den übrigen Verfahren kann lediglich ein Vorschub von höchstens 5 m/min realisiert werden, so daß sie nur stationär durchgeführt werden können.

Es zeigt sich weiterhin, daß lediglich durch Plasmabestrahlung, Laserstrahlung und das Heißluftgebläse ausreichend hohe Temperaturen für eine stabile und dauerhafte Verklebung des Kantenbandes mit dem Werkstück erreicht werden. Mit den anderen Verfahren werden nur Temperaturen von ca. 50 °C erreicht. Auch in bezug auf die Qualität der Verklebung sind die Verfahren der Plasma- und Laseraktivierung der Klebstoffschicht den anderen Verfahren deutlich überlegen.

Das Verfahren der Plasmaaktivierung der Klebstoffschicht ist jedoch mit einem noch größeren Vorschub als im Fall der Laserbehandlung durchzuführen und aus verfahrensökonomischer Sicht wesentlich vorteilhafter, weil zum einen der Energieverbrauch bei der Plasmabehandlung wesentlich geringer ist und zum anderen der Laserstrahl immer aufwendig auf die Dicke und Beschaffenheit der Klebstoffschicht abgestimmt werden muß.

Wird für die plasmaaktivierte Verklebung ein Kantenband, welches durch Koextrusion mit der Klebstoffschicht hergestellt wurde, eingesetzt, so resultiert eine noch beständigere und stärkere Verklebung mit einer nicht mehr erkennbaren Klebefuge.

Die Versuchsergebnisse sind in der nachfolgenden Tabelle 1 zusammengefaßt.

**Tabelle 1**

| | **UV**-**Lampe** | | **Plasma** | | **IR**-**Strahler** | **Heißluftgebläse** | | **Mikrowellen** | **Laser** |
|---|---|---|---|---|---|---|---|---|---|
| | Metallhalogen eisendotiert Hg Dampf | | Kantenband + Primer + Klebstoff | Koextrusion von Kantenband und Klebstoff | | Temperatur: 350 °C | | | Diodenlaser (infrarot, 808 nm) |
| Abstand [cm] | 10 | 8 | 0,6 | 0,6 | 7 | 5 | 0,6 | 7 | -¹ |
| Geschwindigkeit [m/min] | 2-3 | 5 | 30 | 30 | 2-3 | 2-3 | 2-3 | 2-3 | 20-25 |
| Zeit [s] | 3 | 0,6 | 0,1 | 0,1 | 3 | 3 | 1 | 3 | 0,2 |
| Hotmelt A | ca. 50 °C | ca. 49 °C | ca. 114 °C | ca. 121 °C | ca. 52 °C | ca. 114 °C | ca. 55 °C | ca. 51 °C | ca. 108 °C |
| Hotmelt B | ca. 46 °C | ca. 48 °C | ca. 118 °C | ca. 124 °C | ca. 52 °C | ca. 105 °C | ca. 55 °C | ca. 54 °C | ca. 106 °C |
| Qualität der Verklebung² | 5-6 | 5-6 | 1-2 | 1 | 5-6 | 3-4 | 3-4 | 5-6 | 2 |
| Vefahrensökonomie² | 5-6 | 5-6 | 1 | 1 | 5-6 | 3-4 | 3-4 | 5-6 | 2-3 |

| | | | | | | | | | |
|---|---|---|---|---|---|---|---|---|---|
| ¹ Lasereinstrahlung über Schwenkspiegel ² Bewertungssystem nach Schulnotensystem: "1 = sehr gut" bis "6 = ungenügend" | | | | | | | | | |

## Patentansprüche

1. Verfahren zur Anbringung eines Kantenbandes auf mindestens eine Schmalfläche eines insbesondere plattenförmigen Werkstücks durch Fügen, wobei das Kantenband auf seiner mit dem Werkstück zu verbindenden Seite mit einer wärmeaktivierbaren Klebstoffschicht beaufschlagt ist, welche vor dem Fügen durch Bestrahlung erwärmt wird,
wobei die wärmeaktivierbare Klebstoffschicht plasmaaktivierbar ausgebildet ist, insbesondere die wärmeaktivierbare Klebstoffschicht mit mindestens einem energieabsorbierenden und/oder wärmeleitenden Stoff versehen ist, **dadurch gekennzeichnet, daß** das Erwärmen der wärmeaktivierbaren Klebstoffschicht mittels Plasmabestrahlung erfolgt, wobei die Plasmabestrahlung mittels einer Plasmaquelle mit mehreren Plasmadüsen erfolgt, wobei die Temperatur des Plasmas 200 bis 1.000 °C beträgt und/oder wobei die Plasmabestrahlung mit einer Energie von 0,5 bis 20 kWh auf die plasmaaktivierbare Klebstoffschicht einwirkt.

2. Verfahren nach Anspruch 1, **dadurch gekennzeichnet, daß** als Kantenband ein Kantenband aus einem thermoplastischen oder duroplastischen Kunststoff oder aus Holz oder aus Papier oder Pappe verwendet wird und/oder daß als Kantenband ein Kantenband aus einem thermoplastischen oder duroplastischen Kunststoff, insbesondere auf Basis von (i) Polyolefinen, bevorzugt Polyethylen (PE) oder Polypropylen (PP); (ii) Polymethacrylaten (PMA); (iii) Polymethylmethacrylaten (PMMA); (iv) Polyvinylchlorid (PVC); (v) Polyvinylidenhalogenid, insbesondere Polyvinylidenfluorid (PVDF) oder Polyvinylidenchlorid (PVDC); (vi) Acrylnitril/Butadien/ Styrol-Copolymer (ABS); (vii) Polyamiden (PA), Polycarbonaten (PC); (viii) Melamin-Formaldehydharzen; (ix) Epoxidharzen; (x) Phenolharzen oder (xi) Harnstoffharzen, verwendet wird.

3. Verfahren nach einem der vorhergehenden Ansprüche, **dadurch gekennzeichnet, daß** als Werkstück ein Werkstück aus Holz, Holzersatzstoffen, Kunststoffen oder Glas, vorzugsweise Holz oder Holzersatzstoffen, verwendet wird.

4. Verfahren nach einem der vorhergehenden Ansprüche, **dadurch gekennzeichnet, daß** die plasmaaktiverbare Klebstoffschicht mindestens einen Schmelzklebstoff aufweist oder hieraus besteht, insbesondere auf Basis reaktiver oder nichtreaktiver Schmelzklebstoffe, insbesondere wobei die plasmaaktiverbare Klebstoffschicht mindestens einen Schmelzklebstoff auf Basis von Olefinen, insbesondere vorzugsweise amorphen Poly-α-olefinen, Polyamiden, Polyurethan-Elastomeren, Polyester-Elastomeren, Copolyamid-Elastomeren und/oder Ethylen/Vinylacetat-Copolymeren, aufweist oder hieraus besteht.

5. Verfahren nach einem der vorhergehenden Ansprüche, **dadurch gekennzeichnet, daß** die plasmaaktivierbare Klebstoffschicht eine Dicke von höchstens 200 µm, insbesondere höchstens 150 µm, vorzugsweise höchstens 100 µm, besitzt und/oder daß die plasmaaktivierbare Klebstoffschicht eine Dicke im Bereich von 0,1 bis 200 µm, insbesondere 1 bis 150 µm, vorzugsweise 2 bis 100 µm, besitzt und/oder daß die plasmaaktivierbare Klebstoffschicht in einer Auftragsmenge von höchstens 300 g/m², insbesondere höchstens 200 g/m², vorzugsweise höchstens 150 g/m², aufgetragen ist und/oder daß die plasmaaktivierbare Klebstoffschicht in einer Auftragsmenge im Bereich von 1 bis 300 g/m², insbesondere 5 bis 200 g/m², vorzugsweise 10 bis 150 g/m², aufgetragen ist.

6. Verfahren nach einem der vorhergehenden Ansprüche, **dadurch gekennzeichnet, daß** die Beaufschlagung des Kantenbandes mit der plasmaaktivierbaren Klebstoffschicht durch Koextrusion erfolgt oder erfolgt ist.

7. Verfahren nach einem der vorhergehenden Ansprüche, **dadurch gekennzeichnet, daß** der energieabsorbierende und/oder wärmeleitende Stoff der Klebstoffschicht energieabsorbierend und wärmeleitend ausgebildet ist.

8. Verfahren nach einem der vorhergehenden Ansprüche, **dadurch gekennzeichnet, daß** das Verfahren als kontinuierliches Verfahren, insbesondere als Durchlaufverfahren, oder aber als stationäres Verfahren, vorzugsweise als Durchlaufverfahren, betrieben wird und/oder daß das Verfahren als Durchlaufverfahren mit einem Vorschub von mindestens 5 m/min, insbesondere mindestens 10 m/min, bevorzugt mindestens 20 m/min, ganz besonders bevorzugt mindestens 30 m/min, durchgeführt wird und/oder daß das Verfahren als Durchlaufverfahren mit einem Vorschub im Bereich von 5 bis 100 m/min, insbesondere 10 bis 75 m/min, bevorzugt 15 bis 60 m/min, ganz besonders bevorzugt 20 bis 50 m/min, durchgeführt wird.

9. Verfahren nach einem der vorhergehenden Ansprüche, **dadurch gekennzeichnet, daß** die Temperatur des Plasmas, insbesondere bei Austritt aus der oder den Plasmadüsen, 300 bis 900 °C, vorzugsweise 400 bis 800 °C, beträgt und/oder daß die Plasmabestrahlung mit einer Energie von 1 bis 10 kWh auf die plasmaaktivierbare Klebstoffschicht einwirkt und/oder daß zur Erzeugung der Plasmabestrahlung eine Plasmaquelle mit einer elektrischen Energieaufnahme von 0,5 bis 20 kWh, insbesondere 1 bis 10 kWh, eingesetzt wird.

10. Verfahren nach einem der vorhergehenden Ansprüche, **dadurch gekennzeichnet, daß** der Abstand der Plasmaquelle, insbesondere der Düse(n), zur Klebstoffschicht im Bereich von 0,5 bis 20 mm, insbesondere 1 bis 10 mm, vorzugsweise 2 bis 8 mm, besonders bevorzugt 3 bis 6 mm, eingestellt wird.

11. Vorrichtung (1) zur Anbringung eines Kantenbandes (3) auf mindestens eine Schmalfläche (7a) eines insbesondere plattenförmigen Werkstücks (7) durch Fügen, wobei die Vorrichtung (1)
- mindestens eine Einrichtung (2) zur Bevorratung und/oder vorzugsweise kontinuierlichen Abgabe eines Kantenbandes (3),
- mindestens eine Bestrahlungsquelle (4) zur Erwärmung einer Klebstoffbeschichtung eines Kantenbandes (3),
- mindestens eine Andrückeinrichtung (5) zum Andrücken eines Kantenbandes (3) an eine Schmalfläche (7a) des Werkstücks (7) und
- mindestens eine Transporteinrichtung (6) zur Bewegung und/oder zum Transport des Werkstücks (7)
aufweist,
**dadurch gekennzeichnet,**
**daß** die Energiequelle (4) eine Plasmaquelle ist, wobei die Plasmaquelle (4) zur Erzeugung von Plasmatemperaturen von 200 bis 1.000 °C und/oder zur Erzeugung einer Energie von 0,5 bis 20 kWh imstande ist und wobei die Plasmaquelle (4) mehrere Düsen (4a) aufweist, wobei die Düsen (4a) verschiebbar ausgebildet sind und wobei die Düsen (4a) zwischen einer Schmalseite (7a) des Werkstücks (7) und dem Kantenband (3) positionierbar und/oder positioniert sind.

12. Vorrichtung nach Anspruch 11, **dadurch gekennzeichnet, daß** die Düsen (4a) in alle Raumrichtungen verschiebbar ausgebildet sind, insbesondere wobei der Abstand der Düsen (4a) zum Kantenband (3), insbesondere dessen Klebstoffschicht, im Bereich von 0,5 bis 20 mm, insbesondere 1 bis 10 mm, vorzugsweise 2 bis 8 mm, besonders bevorzugt 3 bis 6 mm, einstellbar ist.

13. Vorrichtung nach Anspruch 11 oder 12, **dadurch gekennzeichnet, daß** die Plasmaquelle (4) zur Erzeugung von Plasmatemperaturen, insbesondere bei Austritt aus der oder den Düsen (4a), von 300 bis 900 °C, vorzugsweise 400 bis 800 °C, imstande ist und/oder daß die Plasmaquelle (4) zur Erzeugung einer Energie von 1 bis 10 kWh imstande ist.

## Claims

1. A method for affixing an edge band to at least one narrow surface of an especially plate-shaped work piece by joining, wherein the edge band is applied to its side to be connected with the work piece with a heat-activatable adhesive layer, which is warmed before the joining by irradiation,
wherein
the heat-activatable adhesive layer is designed to be plasma-activatable, in particular the heat-activatable adhesive layer is provided with at least one energy absorbing and/or heat conductive material, **characterized in that** the heating of the heat-activatable adhesive layer occurs by means of plasma irraditation, wherein the plasma irraditation occurs by means of a plasma source with several plasma nozzles, wherein the temperature of the plasma is 200 to 1,000 °C and/or wherein the plasma irradiation with an energy of 0.5 to 20 kWh acts on the plasma-activatable adhesive layer.

2. A method according to Claim 1 **characterized in that** an edge band made of thermoplastic or duroplastic synthetic material or from wood or from paper or cardboard is used as an edge band and/or that an edge band made of a thermoplastic or duroplastic synthetic material, in particular based on (i) polyolefins, preferably polyethylene (PE) or polypropylene (PP); (ii) polymethacrylates (PMA); (iii) polmethylmethacrylates (PMMA); (iv) polyvinyl chloride (PVC); (v) polyvinylidene halgenide, in particular polvinylidene fluoride (PVDF) or polvinylidene chloride (PVDC); (vi) acrylnitrile/butadiene/styrene-copolymer (ABS); vii) polyamides (PA), polycarbonates (PC); (viii) melamine-formaldehyde resins; (ix) epoxy resins; (x) phenolic resins or (xi) urea resins, is used as an edge band.

3. A method according to one of the preceding claims, **characterized in that** a work piece made of wood, wood substitutes, plastics or class, preferably wood or wood substitutes is used as a work piece.

4. A method according to one of the preceding claims, **characterized in that** the plasma-activatable adhesive layer has at least one melt adhesive or consists thereof, in particular on the basis of reactive or non-reactive melt adhesives, in particular wherein the plasma-activatable adhesive layer has at least one melt adhesive on the basis of olefins, in particular preferably amorphous poly-α-olefins, polyamides, polyurethane-elastomers, polyester-elastomers, copolyamide-elastomers and/or ethylene/vinyl acetate-copolymers, or consists thereof.

5. A method according to one of the preceding claims, **characterized in that** the plasma-activatable adhesive layer has a thickness of at most 200µm, in particular at most 150µm, preferably at most 100µm, and/or that the plasma-activatable adhesive layer has a thickness in the range of 0.1 to 200 µm, in particular 1 to 150µm, preferably 2 to 100 µm and/or that the plasma-activatable adhesive layer is applied in an applied quantity of at most 300 g/m², in particular at most 200 g/m², preferably at most 150 g/m² and/or that the plasma-activatable adhesive layer is applied in an applied quantity in the range of 1 to 300 g/m², in particular 5 to 200 g/m², preferably 10 to 150 g/m².

6. A method according to one of the preceding claims, **characterized in that** the application of the edge ban with the plasma-activatable adhesive layer occurs or is carried out by co-extrusion.

7. A method according to one of the preceding claims, **characterized in that** the energy-absorbing and/or heat-conducting material of the adhesive layer is designed to be energy-absorbing and heat-conducting.

8. A method according to one of the preceding claims, **characterized in that** the process is operated as a continuous process, in particular as a run-through process, or else as a stationary process, preferably as a run-through process and/or that the process is carried out as a run-through process with a feed of at least 5 m/min, in particular at least 10 m/min, preferably at least 20 m/min, exceedingly preferably at least 30 m/min and/or that the process is carried out as a run-through process with a feed in the range of 5 to 100 m/min, in particular 10 to 75 m/min, preferably 15 to 60 m/min, exceedingly preferably 20 to 50 m/min.

9. A method according to one of the preceding claims, **characterized in that** the temperature of the plasma, in particular upon departure from the plasma nozzle or plasma nozzles is 300 to 900 °C, preferably 400 to 800 °C and/or that the plasma irradiation with an energy of 1 to 10 kWh acts on the plasma-activatable adhesive layer and/or that to generate the plasma irradiation a plasma source is used with an electrical energy intake of 0.5 to 20 kWh, in particular 1 to 10 kWh.

10. A method according to one of the preceding claims, **characterized in that** the distance of the plasma source, in particular the nozzle(s), to the adhesive layer is set in the range of 0.5 to 20mm, in particular 1 to 10 mm, preferably 2 to 8 mm, especially preferably 3 to 6 mm.

11. An apparatus (1) for applying an edge band (3) on at least one narrow surface (7a) of an especially plate-shaped work piece (7) by joining, wherein the apparatus (1)
- has at least one device (2) for provision and/or preferably continuous delivery of an edge band (3),
- at least one irradiation source (4) for heating an adhesive coating of an edge band (3),
- at least one pressing unit (5) for pressing an edge band (3) onto a narrow surface (7a) of the work piece (7) and
- at least one transport device (6) for the movement and/or for the transport of the work piece (7),
**characterized in**
**that** the energy source (4) is a plasma source, wherein the plasma source (4) is able to generate plasma temperatures of 200 to 1,000°C and/or to generate an energy of 0.5 to 20 kWh and wherein the plasma source (4) has several nozzles (4a), wherein the nozzles (4a) are designed to be movable and wherein the nozzles (4a) can be positioned and/or are positioned between a narrow side (7a) of the work piece (7) and the edge band (3).

12. An apparatus according to claim 11, **characterized in that** the nozzles (4a) are designed movable in all spatial directions, in particular wherein the distance of the nozzles (4a) to the edge band (3), in particular to its adhesive layer, can be set in the range of 0.5 to 20 mm, in particular 1 to 10 mm, preferably 2 to 8 mm, especially preferably 3 to 6 mm.

13. An apparatus according to claim 11 or 12, **characterized in that** the plasma source (4) is able to generate plasma temperatures, in particular upon departure from the plasma nozzle or plasma nozzles (4a), of 300 to 900 °C, preferably 400 to 800 °C and/or that the plasma source (4) is able to generate energy of 1 to 10 kWh.

## Revendications

1. Procédé d'application d'une bande de chant sur au moins une surface étroite d'une pièce, plus particulièrement en forme de plaque, par jointure, la bande de chant étant munie, sur son côté à relier à la pièce, d'une couche de colle activable par la chaleur, qui est chauffée avant la jointure par rayonnement,
la couche de colle activable par la chaleur étant conçue de façon à pouvoir être activée par un plasma, plus particulièrement la couche de colle activable par la chaleur contient au moins une substance absorbant l'énergie et/ou thermo-conductrice, **caractérisé en ce que**
le chauffage de la couche de colle activable par la chaleur a lieu par rayonnement de plasma, le rayonnement de plasma ayant lieu au moyen d'une source de plasma avec plusieurs buses de plasma, la température du plasma étant de 200 à 1000°C et/ou le rayonnement de plasma agissant avec une énergie de 0,5 à 20 kWh sur la couche de colle activable par plasma.

2. Procédé selon la revendication 1, **caractérisé en ce que**, en tant que bande de chant, une bande de chant constituée d'une matière plastique thermoplastique ou thermodurcissable ou de bois ou de papier ou de carton est utilisée et/ou **en ce que**, en tant que bande de chant, une bande de chant constituée d'une matière plastique thermoplastique ou thermodurcissable, plus particulièrement à base de (i) polyoléfines, de préférence du polyéthylène (PE) ou du polypropylène (PP) ; (ii) polyméthacrylates (PMA) ; (iii) polyméthylméthacrylates (PMMA) ; (iv) polychlorure de vinyle (PVC) ; (v) halogénure de polyvinylidène, plus particulièrement du fluorure de polyvinylidène (PVDF) ou du chlorure de polyvinylidène (PVDC) ; (vi) copolymère acrylnitrile/butadiène/styrol (ABS) ; (vii) polyamides (PA), polycarbonates (PC) ; (viii) résines mélamine-formaldéhyde ; (ix) résines époxy ; (x) résine sphénoliques ou (xi) résines à base d'urée, est utilisée.

3. Procédé selon l'une des revendications précédentes, **caractérisé en ce que**, en tant que pièce, une pièce constituée de bois, d'ersatz de bois, de matière plastique ou de verre, de préférence de bois ou d'ersatz de bois, est utilisée.

4. Procédé selon l'une des revendications précédentes, **caractérisé en ce que** la couche de colle activable par plasma comprend au moins une colle thermofusible ou est constituée de celle-ci, plus particulièrement à base de colles thermofusibles réactives ou non réactives, plus particulièrement la couche de colle activable par plasma comprenant au moins une colle thermofusible à base d'oléfines, plus particulièrement de préférence de poly-α-oléfines, de polyamides, d'élastomères de polyuréthane, d'élastomères de polyester, d'élastomères de copolyamide et/ou de copolymères éthylène/acétate de vinyle ou étant constituée de celle-ci.

5. Procédé selon l'une des revendications précédentes, **caractérisé en ce que** la couche de colle activable par plasma présente une épaisseur de 200 µm maximum, plus particulièrement de 150 µm maximum, de préférence de 100 µm maximum et/ou **en ce que** la couche de colle activable par plasma présente une épaisseur de l'ordre de 0,1 à 200 µm, plus particulièrement de 1 à 150 µm, de préférence de 2 à 100 µm et/ou **en ce que** la couche de colle activable par plasma est appliquée avec une quantité d'application de 300 g/m² maximum, plus particulièrement de 200 g/m², de préférence de 150 g/m² maximum et/ou **en ce que** la couche de colle activable par plasma est appliquée avec une quantité d'application de l'ordre de 1 à 300 g/m², plus particulièrement de 5 à 200 g/m², de préférence de 10 à 150 g/m².

6. Procédé selon l'une des revendications précédentes, **caractérisé en ce que** l'enduction de la bande de chant avec la couche de colle activable par plasma a lieu ou a eu lieu par coextrusion.

7. Procédé selon l'une des revendications précédentes, **caractérisé en ce que** la substance absorbant l'énergie et/ou thermoconductrive de la couche de colle est conçue de façon à absorber l'énergie et à conduire la chaleur.

8. Procédé selon l'une des revendications précédentes, **caractérisé en ce que** le procédé est réalisé en tant que procédé continu, plus particulièrement en tant que procédé à passage en continu ou en tant que procédé stationnaire, de préférence en tant que procédé à passage en continu et/ou **en ce que** le procédé est réalisé en tant que procédé de passage en continu avec une vitesse d'avance d'au moins 5 m/min, plus particulièrement d'au moins 10 m/min, de préférence d'au moins 20 m/min, plus particulièrement d'au moins 30 m/min et/ou **en ce que** le procédé est réalisé en tant que procédé de passage en continu avec une vitesse d'avance de l'ordre de 5 à 100 m/min, plus particulièrement de 10 à 75 m/min, de préférence de 15 à 60 m/min, plus particulièrement de préférence de 20 à 50 m/min.

9. Procédé selon l'une des revendications précédentes, **caractérisé en ce que** la température du plasma, plus particulièrement à la sortie de la ou des buses de plasma, est de 300 à 900°C, de préférence de 400 à 800°C et/ou **en ce que** le rayonnement de plasma agit avec une énergie de 1 à 10 kWh sur la couche de colle activable par plasma et/ou **en ce que**, pour générer le rayonnement de plasma, une source de plasma avec une absorption d'énergie électrique de 0,5 à 20 kWh, plus particulièrement de 1 à 10 kWh, est utilisée.

10. Procédé selon l'une des revendications précédentes, **caractérisé en ce que** la distance entre la source de plasma, plus particulièrement la ou les buses, et la couche de colle est ajustée de 0,5 à 20 mm, plus particulièrement de 1 à 10 mm, de préférence de 2 à 8 mm, plus particulièrement de préférence de 3 à 6 mm.

11. Dispositif (1) pour l'application d'une bande de chant (3) sur au moins une surface étroite (7a) d'une pièce (7), plus particulièrement en forme de plaque, par jointure, le dispositif (1) comprenant
- au moins un dispositif (2) pour le stockage et/ou de préférence la distribution en continu d'une bande de chant (3),
- au moins une source de rayonnement (4) pour le chauffage d'une couche de colle d'une bande de chant (3),
- au moins un dispositif de compression (5) pour la compression d'une bande de chant (3) contre une surface étroite (7a) de la pièce (7) et
- au moins un dispositif de transport (6) pour le déplacement et/ou le transport de la pièce (7),
**caractérisé en ce que**
la source d'énergie (4) est une source de plasma, la source de plasma (4) étant en mesure de générer des températures de plasma de 200 à 1000°C et/ou une énergie de 0,5 à 20 kWh et la source de plasma (4) comprenant plusieurs buses (4a), les buses (4a) étant conçues de manière coulissante et les buses (4a) étant positionnées ou pouvant être positionnées entre un côté étroit (7a) de la pièce (7) et la bande de chant (3).

12. Dispositif selon la revendication 11, **caractérisé en ce que** les buses (4a) sont conçues de manière coulissante dans toutes les directions de l'espace, plus particulièrement la distance entre les buses (4a) et la bande de chant (3), plus particulièrement sa couche de colle, peut être ajustée de 0,5 à 20 mm, plus particulièrement de 1 à 10 mm, de préférence de 2 à 8 mm, plus particulièrement de préférence de 3 à 6 mm.

13. Dispositif selon la revendication 11 ou 12, **caractérisé en ce que** la source de plasma (4) est en mesure de générer des températures de plasma, plus particulièrement à la sortie de la ou des buses (4a), de 300 à 900°C, de préférence de 400 à 800°C et/ou **en ce que** la source de plasma (4) est en mesure de générer une énergie de 1 à 10 kWh.
